Europäisches Patentamt

European Patent Office

Office européen des brevets

(19)

(11) Veröffentlichungsnummer: **0 090 132**
A1

# (12) EUROPÄISCHE PATENTANMELDUNG

(21) Anmeldenummer: 83100467.6

(22) Anmeldetag: 20.01.83

(51) Int. Cl.³: **B 01 D 53/18**, F 28 F 25/04

(30) Priorität: 31.03.82 DE 3211885

(43) Veröffentlichungstag der Anmeldung: 05.10.83
Patentblatt 83/40

(84) Benannte Vertragsstaaten: BE FR IT NL SE

(71) Anmelder: Hugo Petersen Ges. für verfahrenstechn.
Anlagenbau mbH & Co KG, Postfach 4640,
D-6200 Wiesbaden 1 (DE)

(72) Erfinder: Seidler, Willi, Oberriethstrasse 24,
D-6200 Wiesbaden 1 (DE)

(74) Vertreter: Klein, Rolf, Dipl.-Ing., Stossdorfer Strasse 34,
D-5202 Hennef 1 (DE)

(54) Flüssigkeitsverteiler für einen Füllkörperturm.

(57) Vorrichtung zur Berieselung einer Füllkörperschüttung (2) mit einer Flüssigkeit in einem zylindrischen Füllkörperturm (1) für einen zwischen einem Gas und einer Flüssigkeit stattfindenden Wärme- und Stoffaustausch, die oberhalb oder innerhalb oder teilweise innerhalb der Schüttung angeordnet ist und die aus Zuführrohren (4) mit Durchtrittsöffnungen versehenen Verteilerrohren (5) besteht, wobei die Zuführrohre mit den Verteilerrohren flüssigkeitsverbunden sind, wobei in im freien Turmquerschnitt gedachten drei größtmöglichen gleichgroßen Rautenflächen (3), deren Summe das querschnittsbezogene einbeschriebene Sechseck bilden, jeweils ein Zuführrohr mit zugeordneten untereinander gleichlangen Verteilerrohren angeordnet ist, wobei die Längsachse eines jeden Zuführrohres parallel zu einer Rautenbegrenzungsstrecke und die Längsachse der Verteilerrohre parallel zu der anderen nichtparallelen Rautenbegrenzungsstrecke liegen und wobei die Längsachsen sämtlicher Verteilerrohre oberhalb oder unterhalb oder auf gleicher Höhe mit den Längsachsen der Zuführrohre liegen und wobei in einer gedachten Rautenfläche zwei oder mehrere parallele Zuführrohre angeordnet sind.

Hugo Petersen
Gesellschaft für verfahrenstechnischen Anlagenbau mbH
& Co KG

6200 Wiesbaden

527o Gummersbach, den 22.o3.1982

P-Pa 82o4

Be./Al.

### Patentanmeldung

"Flüssigkeitsverteiler für einen Füllkörperturm"

Die Erfindung betrifft eine
Vorrichtung zur Berieselung einer Füllkörperschüttung
mit einer Flüssigkeit in einem zylindrischen Füllkörperturm für einen zwischen einem Gas und einer Flüssigkeit
stattfindenden Wärme- und Stoffaustausch, die oberhalb
oder innerhalb oder teilweise innerhalb der Schüttung
angeordnet ist und die aus Zuführrohren und mit Durchtrittsöffnungen versehenen Verteilerrohren besteht, wobei die Zuführrohre mit den Verteilerrohren flüssigkeitsseitig verbunden sind.

Für einen zwischen einem Gas und einer Flüssigkeit stattfindenden Wärme- und Stoffaustausch hat die Füllkörperschüttung nicht nur die Aufgabe, eine große Austauschfläche zu bilden, sondern auch die Flüssigkeit innerhalb
der Schüttung gleichmäßig zu verteilen. Da letzteres
einen Einfluß auf die Höhe der Schüttung hat, ist man
bestrebt, durch geeignete Berieselungsvorrichtungen eine
gleichmäßige Verteilung der Flüssigkeit schon mit Eintritt in die Füllkörperschüttung zu erzielen.

Zur gleichmäßigen Berieselung von Füllkörperschüttungen
sind unterschiedliche Systeme bekannt, von denen die gebräuchlichsten Düsenverteiler, Kasten- oder Rinnenverteiler und Rohrverteiler sind. Diese Systeme haben sich in

./.

der Praxis seit langem bewährt, haben aber jeweils spezifische Nachteile, insbesondere beim Einsatz von stark korrosiven Medien, z. B. konzentrierter Schwefelsäure.

Düsenverteilersysteme zeigen über längere Zeit keine materialmäßig ausreichende Standfestigkeit und keine bleibenden Düsencharakteristiken, da infolge der erhöhten Geschwindigkeit im Düsenaustritt abrasive und chemische Korrosionen verstärkt auftreten.

Das zur Zeit noch gebräuchlichste Verteilersystem ist das mit offenen Rinnen. Eine gleichmäßige Berieselung mit diesem System setzt voraus, daß bei kleinen Flüssigkeitsgeschwindigkeiten in den Rinnen der Flüssigkeitsstand an allen Stellen der Rinnen gleich hoch ist und daß die Rinnen exakt gefertigt sind. Die Verwendung von Gußrinnen führt aus korrosions- und gußtechnischen Gründen durch die Ausbildung großer Wandstärken zu sehr schweren Konstruktionen.

Bei den bekannten Rohrverteilersystemen wird die Berieselungsflüssigkeit über ein Zuführrohr einer großen Anzahl von parallel angeordneten Verteilerrohren zugeführt. Durch die parallele Anordnung der Verteilerrohre in der kreisförmigen Querschnittsfläche eines Füllkörperturmes ergeben sich unterschiedliche Rohrlängen. Unter der Voraussetzung gleicher Durchmesser der Verteilerrohre treten unterschiedliche Strömungsgeschwindigkeiten in den einzelnen ungleich langen Rohren auf, was zu unterschiedlichen Druckverlusten und letztlich zu ungleichmäßiger Mengenverteilung der Berieselungsflüssigkeit führt.

Der vorliegenden Erfindung liegt die Aufgabe zugrunde, eine Vorrichtung zur Berieselung von Füllkörperschüttungen in Füllkörpertürmen bereitzustellen, die eine gleichmäßige Verteilung der Berieselungsflüssigkeit mit Eintritt in die Füllkörperschüttung gewährleistet.

./.

Zur Lösung der Aufgabe wird erfindungsgemäß vorgeschlagen, daß in im freien Turmquerschnitt gedachten drei größtmöglichen gleichgroßen Rautenflächen, deren Summe das querschnittsbezogene einbeschriebene Sechseck bilden, jeweils ein Zuführrohr mit zugeordneten untereinander gleichlangen Verteilerrohren angeordnet ist, wobei die Längsachse eines jeden Zuführrohres parallel zu einer Rautenbegrenzungsstrecke und die Längsachse der Verteilerrohre parallel zu der anderen nicht parallelen Rautenbegrenzungsstrecke liegen.

In einer weiteren Ausgestaltung der Erfindung wird vorgeschlagen, daß die Längsachsen sämtlicher Verteilerrohre oberhalb oder unterhalb oder auf gleicher Höhe mit den Längsachsen der Zuführrohre liegen und daß in einer gedachten Rauten- fläche zwei oder mehrere parallele Zuführrohre angeordnet sind.

In den beigefügten Zeichnungen sind mehrere,im folgenden näher beschriebene Ausführungsbeispiele dargestellt.Es zeigen:

Fig. 1    eine Ansicht eines Querschnittes eines Füllkörperturmes im Bereich der erfindungsgemäßen Vorrichtung mit einer nicht näher dargestellten Ringleitung für die Versorgung mit Berieselungsflüssigkeit, in dem die Zuführrohre parallel und mittig zwischen den beiden parallelen Begrenzungsstrecken der drei gedachten größtmöglichen gleichgroßen Rautenflächen liegen.

Fig. 2    eine Ansicht gemäß Fig. 1, in der die Zuführrohre in den zu den radialen parallelen Begrenzungsstrecken der drei gedachten Rautenflächen liegen.

Fig. 3    eine Ansicht gem. Fig. 1, in der die Zuführrohre in den radialen Begrenzungsstrecken der drei gedachten Rautenflächen liegen.

Fig. 4     eine Ansicht gem. Fig. 3, in der die Zuführrohre nicht über die Ringleitung sondern über eine Leitung in der Turmachse
           mit Berieselungsflüssigkeit beschickt werden.


Fig. 5     eine Ansicht gemäß Fig. 1, in der zwei der
           drei Zuführrohre eine zueinander parallele
           Anordnung aufweisen.


Fig. 6     eine Ansicht gemäß Fig. 1, in der in jeder
           gedachten Rautenfläche zwei parallele Zu-
           führrohre mit mittig angeordneten, gleich-
           langen Verteilerrohren liegen.


Fig. 7     eine Ansicht gemäß Fig. 6, in der die gleichlangen Verteilerrohre an einem Ende mit den
           beiden parallelen Zuführrohren verbunden sind.


Fig. 8     eine Ansicht gemäß Fig. 1, in der in jeder
           gedachten Rautenfläche drei parallele Zuführrohre liegen.


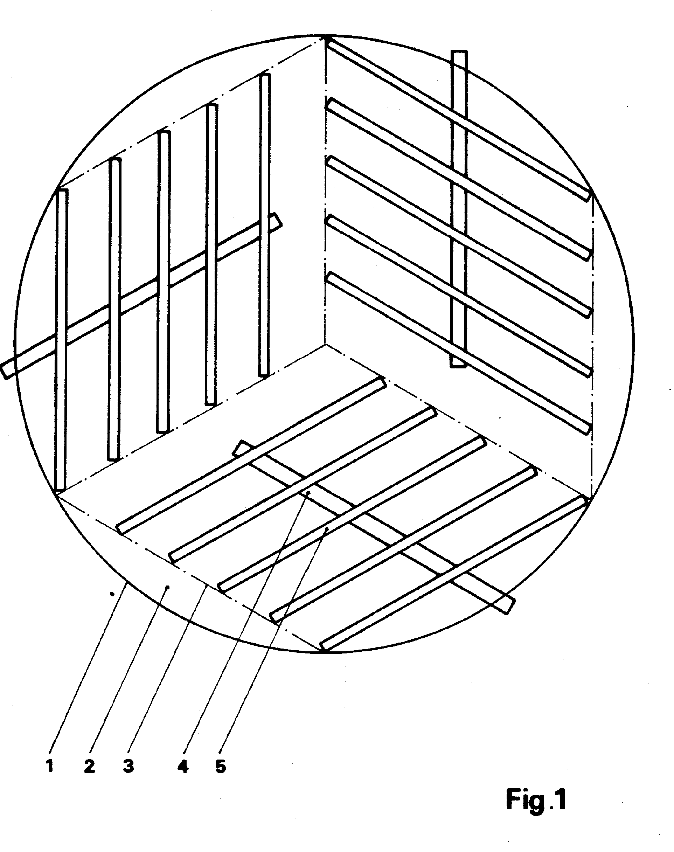

Gemäß Fig. 1 sind in der freien Querschnittsebene, die
- nicht näher dargestellt - sich oberhalb oder innerhalb
oder teilweise innerhalb einer Füllkörperschüttung 2 eines zylindrischen Füllkörperturmes 1 befindet, drei
größtmögliche gleichgroße gedachte Rautenflächen 3 angeordnet, deren Summe ein querschnittsbezogenes einbeschriebenes Sechseck bilden. In jeder gedachten Rautenfläche
befindet sich mittig zwischen den beiden parallelen Rautenbegrenzungsstrecken ein zu diesen Strecken paralleles
Zuführrohr 4, das leitungsmäßig mit einer nicht näher
dargestellten Ringrohrleitung außerhalb des zylindrischen
Mantels des Füllkörperturmes 1 verbunden ist, über die
die Versorgung mit Berieselungsflüssigkeit erfolgt.

./.

Das Zuführrohr 4 ist flüssigkeitsseitig mit gleichlangen
Verteilerrohren 5 verbunden, deren Längsachsen innerhalb
der gedachten Rautenfläche 3 parallel zu den anderen, gegenüber dem Zuführrohr nicht parallelen Rautenbegrenzungsstrecken und auf gleicher Höhe mit den Längsachsen der Zuführrohre 4 liegen. In einer nicht näher dargestellten
Ausgestaltung der Erfindung besteht jedoch die Möglichkeit, die Längsachsen der Verteilerrohre auch oberhalb
oder unterhalb der Längsachsen der Zuführrohre anzuordnen.

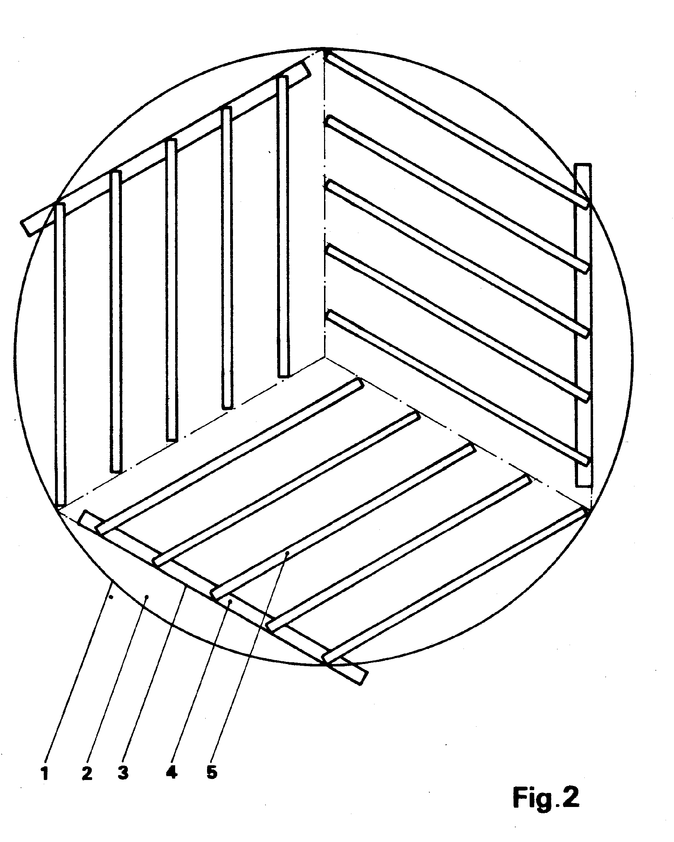

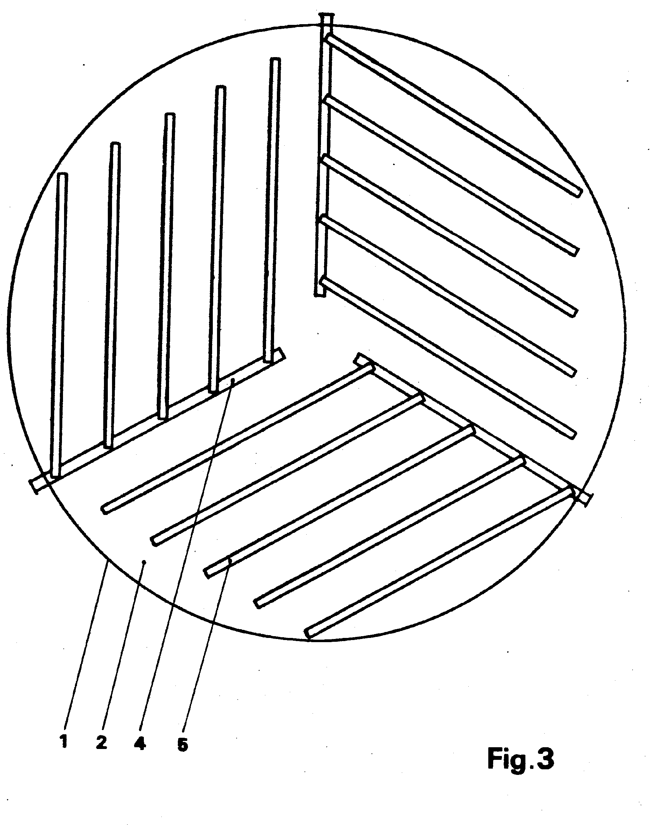

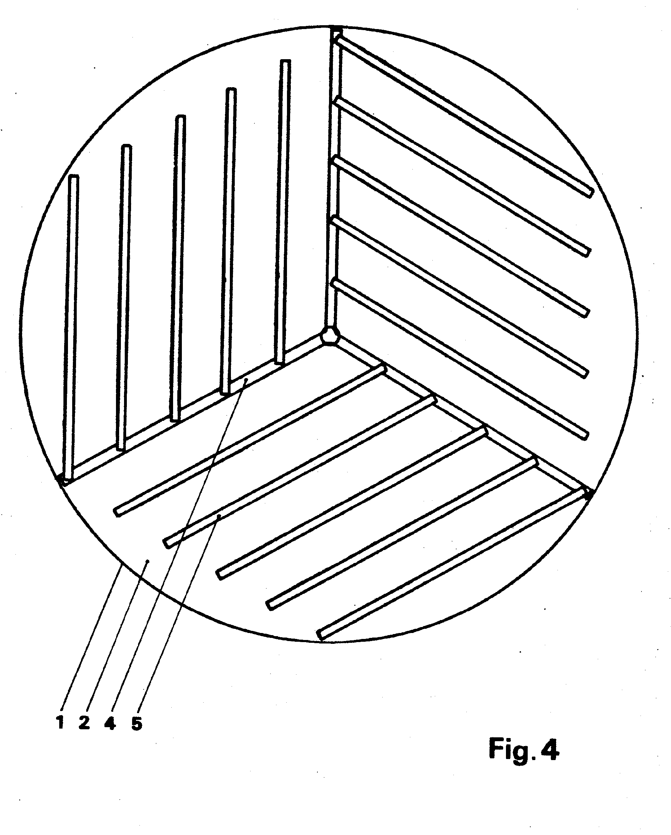

Entsprechend anderen Ausführungsbeispielen der Erfindung
kann die Längsachse des Zuführrohres 4 entweder in der
radialen Rautenbegrenzungsstrecke (Fig. 3) oder in der zu
dieser radialen, parallelen Rautenbegrenzungsstrecke (Fig.2)
oder auch parallel und beliebig zwischen den beiden parallelen Rautenbegrenzungsstrecken liegen. Entsprechend einem in Fig. 4 dargestellten Ausführungsbeispiel erfolgt
die Versorgung mit Berieselungsflüssigkeit nicht über
eine Ringleitung sondern über eine in der Turmachse befindliche Leitung.

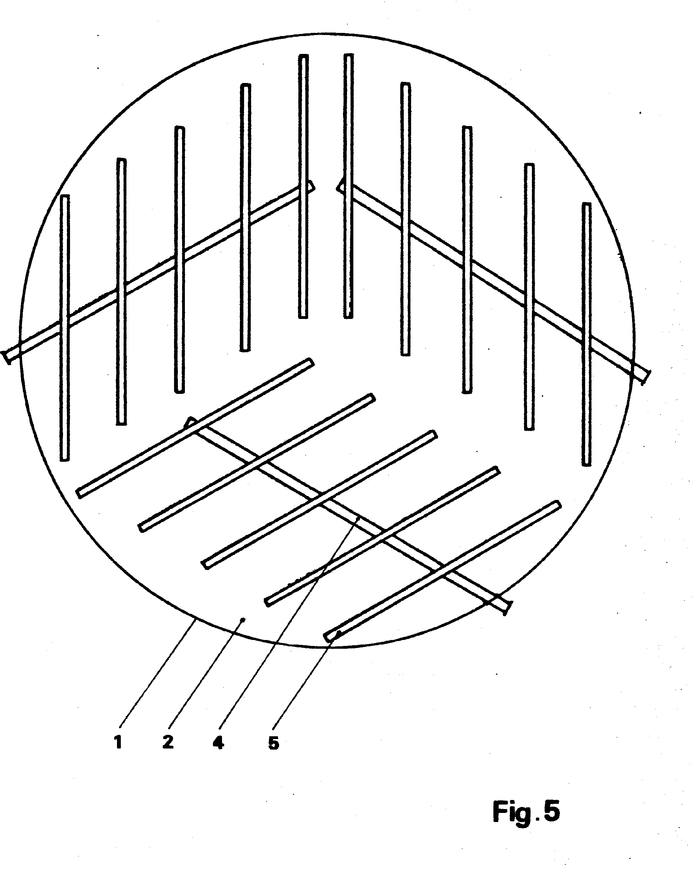

Die Längsachsen der drei Zuführrohre sind dabei gemäß
Fig. 1, 2, 3 und 4 zueinander um einen Winkel von 120°
versetzt angeordnet. Gemäß dem in Fig. 5 dargestellten
Ausführungsbeispiel kann aber auch für zwei oder drei
Zuführrohre 4 eine parallele Anordnung im Sinne der in
den Fig. 1 bis 3 dargestellten Lösungen gewählt werden.

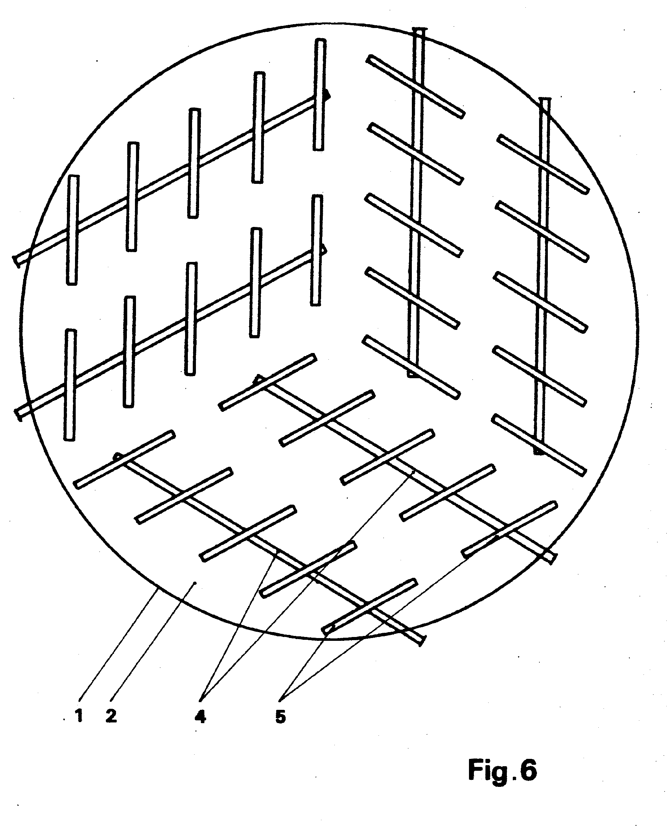

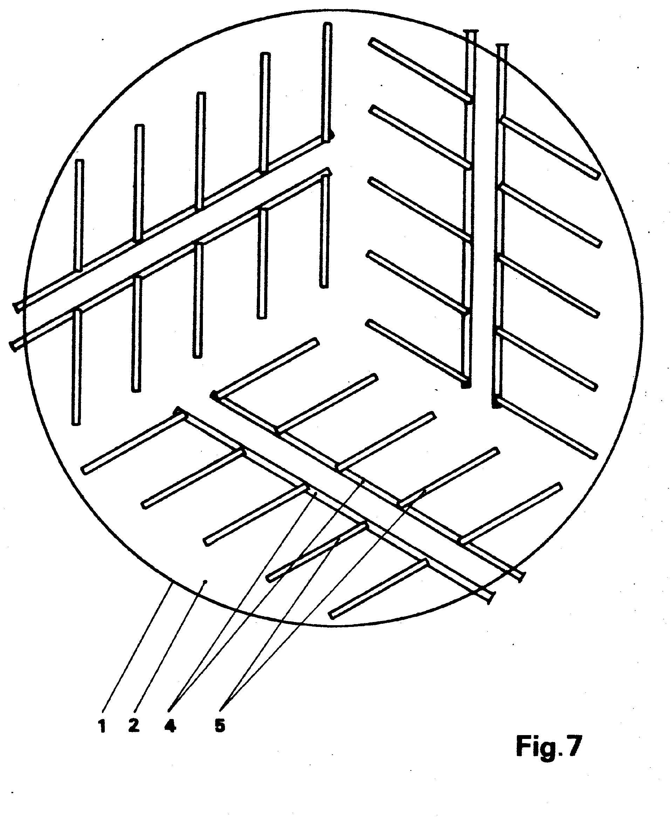

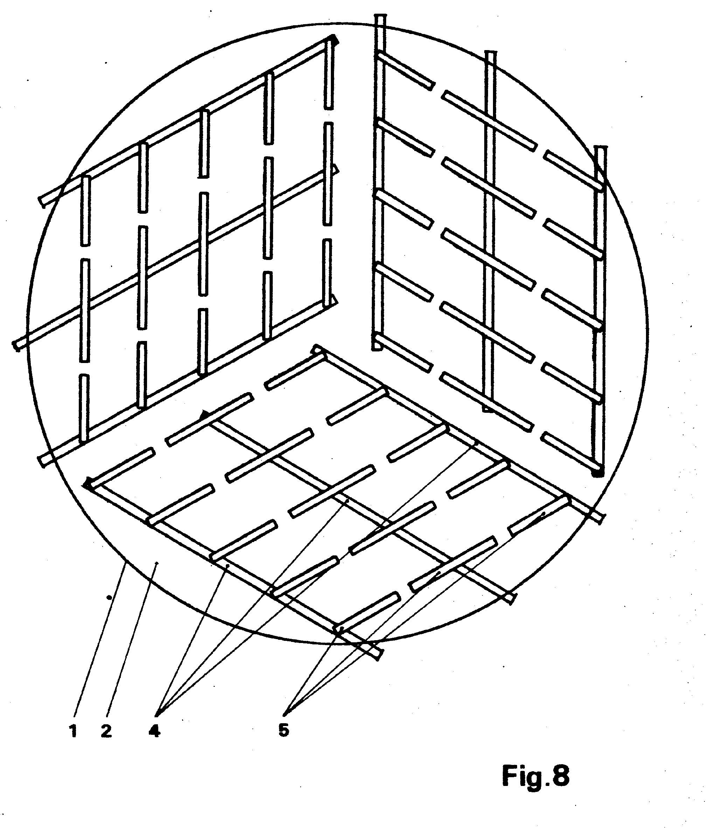

Nach den in Fig. 6, 7 und 8 dargestellten Ausführungsbeispielen können jeder gedachten Rautenfläche zwei oder drei
parallele Zuführrohre zugeordnet werden.

./.

Die einzelnen Verteilerrohre sind im Hinblick auf eine optimale Füllkörperberieselung in bekannter Weise mit mehreren in bestimmten Abständen angeordneten, schlitzartigen Druchtrittsöffnungen versehen, wobei eine Durchtrittsöffnung am untersten Niveaupunkt jedes Verteilerrohres das Austragen von Feststoffpartikeln mit der Berieselungsflüssigkeit ermöglichen soll. Die Bemessung der Abstände, die Zahl und die Größe der Durchtrittsöffnungen erfolgen derart, daß die Austrittsgeschwindigkeit derBerieselungsflüssigkeit das 2- bis 3-fache, mindestens jedoch das 1,5-fache der Strömungsgeschwindigkeit im Verteilerrohr 5 beträgt.

Auf diese Weise wird vorteilhaft sichergestellt, daß die Mengenverteilung der Berieselungsflüssigkeit über den Querschnitt des Füllkörperturmes mit Eintritt in die Füllkörperschüttung gleichmäßig erfolgt. Durch entsprechende Durchtrittsöffnungen an jedem Verteilerrohr wird die Ablagerung von Feststoffpartikeln im Verteilerrohr verhindert. Eine Plazierung der erfindungsgemäßen Vorrichtung innerhalb der Füllkörperschüttung hat überdies den Vorteil, daß vom Gas mitgerissene Flüssigkeitstropfen in der über der Vorrichtung liegenden Füllkörperschüttung abgeschieden und dem Hauptstrom der Berieselungsflüssigkeit wieder zugeführt werden. Durch die Verwendung von gleichlangen Verteilerrohren und Zuführrohren ist überdies eine wirtschaftliche optimale Konstruktion und Fertigung der Berieselungsvorrichtung gegeben.

Hugo Petersen  — 7 —  527o Gummersbach, den 22.o3.1982
Gesellschaft für verfahrens-                    P-Pa 82o4
technischen Anlagenbau mbH
& Co KG                                          Be./Al.

62oo Wiesbaden

0090132

Patentansprüche

1. Vorrichtung zur Berieselung einer Füllkörperschüttung
   mit einer Flüssigkeit in einem zylindrischen Füllkörperturm für einen zwischen einem Gas und einer
   Flüssigkeit stattfindenden Wärme- und Stoffaustausch,
   die oberhalb oder innerhalb oder teilweise innerhalb
   der Schüttung angeordnet ist und die aus Zuführrohren
   und mit Durchtrittsöffnungen versehenen Verteilerrohren besteht, wobei die Zuführrohre mit den Verteilerrohren flüssigkeitsseitig verbunden sind,  d a -
   d u r c h   g e k e n n z e i c h n e t,   daß in im
   freien Turmquerschnitt gedachten drei größtmöglichen
   gleichgroßen Rautenflächen, deren Summe das querschnittsbezogene einbeschriebene Sechseck bilden,
   jeweils ein Zuführrohr mit zugeordneten untereinander gleichlangen Verteilerrohren angeordnet ist, wobei die Längsachse eines jeden Zuführrohres parallel
   zu einer Rautenbegrenzungsstrecke und die Längsachse
   der Verteilerrohre parallel zu der anderen nicht parallelen Rautenbegrenzungsstrecke liegen.

2. Vorrichtung nach Anspruch 1,  d a d u r c h   g e -
   k e n n z e i c h n e t,   daß die Längsachsen sämtlicher Verteilerrohre oberhalb oder unterhalb oder
   auf gleicher Höhe mit den Längsachsen der Zuführrohre
   liegen.

3. Vorrichtung nach den Ansprüchen 1 und 2,  d a d u r c h
   g e k e n n z e i c h n e t,   daß in einer gedachten
   Rautenfläche zwei oder mehrere parallele Zuführrohre angeordnet
   sind.

1   2   3   4   5

**Fig.1**

1  2  3  4  5

**Fig.2**

1  2  4  5

**Fig.3**

1 2 4 5

**Fig. 4**

1    2    4    5

**Fig.5**

0090132

1  2     4     5

**Fig.6**

1   2   4   5

**Fig.7**

1  2  4  5

**Fig.8**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A- 703 029 (K. WOLINSKI) | 1 | B 01 D 53/18<br>F 28 F 25/04 |
| | --- | | |
| A | DE-A-2 849 350 (BIURO STUDIOW) | 1 | |
| | ----- | | |

**RECHERCHIERTE SACHGEBIETE (Int. Cl. ³)**

B 01 D
C 02 F
F 28 F

Der vorliegende Recherchenbericht wurde für alle Patentansprüche erstellt.

| Recherchenort<br>DEN HAAG | Abschlußdatum der Recherche<br>16-06-1983 | Prüfer<br>TEPLY J. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503. 03.82